# EUROPÄISCHE PATENTSCHRIFT

(11) **EP 4 202 391 B1**
(45) Veröffentlichungstag und Bekanntmachung des Hinweises auf die Patenterteilung: **18.09.2024**
(21) Anmeldenummer: 22212855.5
(22) Anmeldetag: 12.12.2022
(51) Int. Cl.: G01L 9/00, G01L 19/00, G01L 19/06, G01L 19/14, G01L 23/18

(54) **DRUCKSENSOR FÜR STATISCHE UND DYNAMISCHE DRUCKMESSUNGEN**
PRESSURE SENSOR FOR STATIC AND DYNAMIC PRESSURE MEASUREMENTS
CAPTEUR DE PRESSION POUR MESURES DE PRESSION STATIQUES ET DYNAMIQUES

(30) Priorität: 22.12.2021 AT 510342021
(43) Veröffentlichungstag der Anmeldung: 28.06.2023
(73) Patentinhaber: Piezocryst Advanced Sensorics GmbH, 8020 Graz (AT)
(72) Erfinder: Glibusic, Antonio, 8020 Graz (AT); Baumgartner, Martin, 8522 Groß St. Florian (AT)
(74) Vertreter: Babeluk, Michael

(56) Entgegenhaltungen:
- DE-B4- 102013 012 507
- US-A- 3 484 732

## Beschreibung

Die Erfindung betrifft einen Drucksensor für statische und dynamische Druckmessungen, mit einem Sensorgehäuse und einer druckseitig am Sensorgehäuse angeordneten Sensormembran, wobei im Sensorgehäuse ein auf die Membranebene normal ausgerichtetes Trägerelement angeordnet ist, welches mit der Sensormembran zumindest indirekt in Kontakt steht, sich am Sensorgehäuse, vorzugsweise an dessen Boden, kraftschlüssig abstützt und ein Dehnungsmesselement zur Gewinnung eines vom zu messenden Druck abhängigen Messsignals aufweist.

Niedrige Drücke im Bereich bis 10 bar werden beispielsweise mit Hilfe der piezoresistiven Technologie (Silizium-Messzelle) gemessen, da diese sehr hohe Empfindlichkeiten aufweisen. Aufgrund der geringeren Langzeitstabilität müssen derartige Drucksensoren jedoch regelmäßig rekalibriert werden. Außerdem sind die piezoresistiven Sensoren sehr teuer. Ein weiterer Nachteil ist, dass bei der piezoresistiven Technologie bei hohen Temperaturen ein Zwischenmedium (z.B. Silikonöl) zur Druckübertragung zum Einsatz kommt, was einen Verlust der Messdynamik zur Folge hat. Außerdem wird der Druck des zu messenden Mediums über eine oder mehrere stirnseitige Bohrungen zur Membran der Messzelle geleitet. Beispielsweise bei Verwendung des Drucksensor im Abgastrakt von Verbrennungsmotoren können sich Ablagerungen von Abgasrückständen in den Bohrungen bilden, wodurch sich das Sensorverhalten unkontrollierbar ändert.

Herkömmliche Dehnungsmessstreifen, insbesondere in Drucksensoren mit einem Durchmesser < 10 mm, sind kaum für die Messung niedriger Drücke geeignet, da die für eine reproduzierbare Druckmessung erforderlichen Dehnungswerte nicht erreicht werden.

In diesem Zusammenhang ist aus der EP 2 993 453 A1 ein Drucksensor bekannt geworden, bei welchem ein Dehnungsmesselement, beispielsweise eine Dehnungsmessstreifen Struktur (DMS-Struktur), auf der Innenseite einer verformbaren Membran des Hochtemperatur-Drucksensors zur Druckmessung angeordnet ist.

Ähnliches zeigt die EP 1 991 849 B1, welche ebenfalls eine DMS-Struktur mit mehreren mäanderartigen Dehnmessstreifen auf einem verformbaren Substrat eines Hochtemperatur-Drucksensorelements zeigt. Das Dehnungsmesselement ist hier außen (druckseitig) am Sensor angeordnet.

Auch die US 3,484,732 A beschreibt einen Drucksensor mit einem Sensorelement umfassend eine rechteckige Struktur. Wird der Drucksensor mit Druck beaufschlagt, so wird die ansonsten gerade rechteckige Struktur gekrümmt und so der Druck gemessen. Auch die DE 10 2013 012 507 B4 beschreibt eine ähnliche Struktur eines Drucksensors, mit mehreren Dehnungsafnehmern, die auf einer geraden Fläche eines Verformungskörpers angeordnet sind. Im Unterschied zu der beanspruchten Erfindung ist besagte Fläche im unbelasteten Zustand nicht gekrümmt.

Nachteilig ist die hohe Temperaturbelastung der DMS-Struktur und der meist beschränkte Platz zur Anordnung der DMS-Struktur an den verformbaren Bereichen der Sensormembran, insbesondere dann, wenn kompakte Drucksensoren mit kleinem Durchmesser benötigt werden.

Die EP 3 543 671 A1 beschreibt einen Drucksensor, dessen Sensormembran einen ersten, äußeren Membranbereich für die dynamische Druckmessung und einen zweiten, inneren Membranbereich für die statische Druckmessung aufweist. Für die statische Druckmessung kommt eine DMS-Struktur zur Anwendung, die im zentralen Innenbereich des Sensormembran befestigt ist. Damit entspricht dieses Dokument im Wesentlichen der oben zitierten EP 2 993 453 A1.

Schließlich zeigt die EP 2 715 300 B1 einen Drucksensor für die gleichzeitige statische und dynamische Druckmessung. Der Sensor weist in einem Sensorgehäuse beispielsweise zwei piezoelektrische Messelemente auf, die im transversalen Modus betrieben werden, um dynamisch Druck zu messen. Die piezoelektrischen Messelemente sind stehend im Sensorgehäuse gehalten und vorgespannt. Über eine Sensormembran wird Kraft auf die Stirnflächen der rechteckförmigen Messelemente eingeleitet, wobei diese proportional zur anliegenden Kraft gestaucht werden. Für eine gleichzeitige statische Druckmessung ist eine Dehnmessstruktur vorgesehen, die auf einem oder mehreren zusätzlichen piezoelektrischen Elementen aufgebracht ist. Dabei kann auf der Seitenfläche eines oder mehrerer der zusätzlichen piezoelektrischen Messelemente - welche indirekt mit der Sensormembran in Kontakt stehen und sich am Boden des Sensors abstützen - ein Dielektrikum und anschließend eine Dehnmessstruktur aufgebracht werden. Da somit das Signal für die dynamische Messung als auch das Signal für die statische Messung über dieselbe Sensormembran erzeugt werden, ist eine phasenrichtige Messung beider Signale möglich. Nachteilig ist jedoch die nur geringe Verformung (Stauchung) der piezoelektrischen Messelemente, die - insbesondere bei kleinen Druckwerten - kaum brauchbare, reproduzierbare Messergebnisse liefert.

Aufgabe der Erfindung ist es - ausgehend von einem Drucksensor der eingangs genannten Bauart - Verbesserungen vorzuschlagen, um auch in niedrigen Druckbereichen genaue, reproduzierbare Messungen vornehmen zu können. Weiters soll ein derart verbesserter Drucksensor auch in kompakter Bauweise mit kleinem Durchmesser herstellbar sein.

Erfindungsgemäß wird dies dadurch erreicht, wie im kennzeichnenden Teil des in Anspruchs 1 definiert, dass das Trägerelement für das Dehnungsmesselement in seiner Längserstreckung zumindest einen gekrümmten Steg aufweist, dessen Krümmung bzw. dessen Krümmungsradius sich in Abhängigkeit der durch die Sensormembran eingeleiteten Kraft ändert, wobei ein sensitiver Teil des Dehnungsmesselements am gekrümmten Steg befestigt ist.

Durch das erfindungsgemäße Design der eigentlichen "Messzelle" (Applikation eines Dehnungsmesselements auf einem bevorzugt dünnen, gekrümmten Steg), können auch bei kleinen Membrandurchmessern, bei nur kleinen, über die Sensormembran eingeleiteten Kräften (resultierend aus niedrigen Drücken) relativ hohe Dehnungswerte im sensitiven Teil des Dehnungsmesselements erzielt und für die Messung genutzt werden.

Bevorzugt kann dabei der sensitive Teil des Dehnungsmesselements als ein mäanderförmiges Messgitter eines metallischen Folien-Dehnmessstreifens ausgebildet sein (DMS-Struktur), oder auch ein piezoresistives Element enthalten, dessen elektrischer Widerstand sich bei einer Verformung durch Druck oder Zug messbar ändert.

Gemäß einer bevorzugten Ausführungsvariante weist das Trägerelement, beispielsweise in einer symmetrischen Anordnung, zwei gegenüberliegende, gekrümmte Stege auf, an welchen jeweils ein sensitiver Teil eines Dehnungsmesselements befestigt ist.

Eine weitere Variante der Erfindung sieht vor, dass das Trägerelement in seiner Längserstreckung nacheinander zumindest zwei gekrümmte Stege aufweist, die S-förmig oder wellenförmig angeordnet sind und jeweils den sensitiven Teil eines Dehnungsmesselements tragen.

Alle genannten Varianten der Trägerelemente samt appliziertem Dehnungsmesselement können platzsparend im Inneren des Sensorgehäuses angeordnet sein, sodass Drucksensoren kompakter Bauart mit kleinem Außendurchmesser verwirklicht werden können.

Die Erfindung wird im Folgenden an Hand von Ausführungsbeispielen näher erläutert. Es zeigen:
- Fig. 1: einen erfindungsgemäßen Drucksensor in einer Schnittdarstellung längs der Sensorachse;
- Fig. 2: eine erste Variante des erfindungsgemäßen Drucksensors in einer Schnittdarstellung gemäß Fig. 1;
- Fig. 3: ein Detail des Drucksensors gemäß Fig. 1 in einer vergrößerten, dreidimensionalen Darstellung;
- Fig. 4: ein weiteres Detail des Drucksensors in einer vergrößerten Draufsicht;
- Fig. 5: eine zweite Variante des erfindungsgemäßen Drucksensors in einer Schnittdarstellung gemäß Fig. 1; sowie
- Fig. 6: eine dritte Variante des erfindungsgemäßen Drucksensors in einer Schnittdarstellung gemäß Fig. 1.

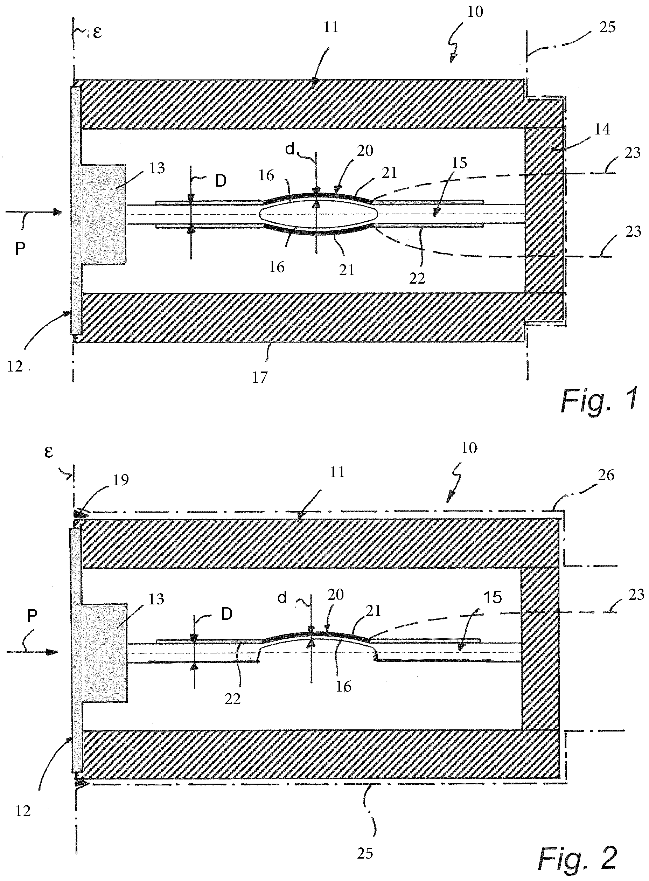

Die in Fig. 1 dargestellte Ausführungsvariante des Drucksensors 10, der bevorzugt für die statische Messung kleiner Drücke im Bereich von 0 bar bis 10 bar aber auch für niederfrequente, dynamische Druckmessungen verwendet werden kann, weist ein Sensorgehäuse 11 mit einer zylindrischen Wand 17 auf, die an einem Ende in einer Membranebene ε eine vom zu messenden Druck p beaufschlagte Sensormembran 12 aufweist und am gegenüberliegenden Ende von einem an der zylindrischen Wand 17 befestigten Boden 14 des Sensorgehäuses 11 begrenzt ist. Der Boden 14 kann auch einteilig mit der Wand 17 des Sensorgehäuses 11 hergestellt sein.

Im Inneren des Sensorgehäuses 11 ist die eigentliche Messzelle des Sensors, bestehend aus dem Trägerelement 15 und dem darauf applizierten Dehnungsmesselement 20 angeordnet. Dabei ist das Trägerelement 15 in Richtung der aus der Druckeinleitung p resultierenden Kraft orientiert, steht einerseits mit der Sensormembran 12 bzw. deren Membranstempel 13 kraftschlüssig in Kontakt, und stützt sich andererseits kraftschlüssig am Sensorgehäuse 11, beispielsweise an dessen Boden 14, ab. Die kraftschlüssige Abstützung ermöglicht dabei eine Kraftübertragung bzw. Krafteinleitung aus dem membranabgewandten Ende des Trägerelements 15 in die Struktur des Sensorgehäuses 11. Das Trägerelement 15 ist auf die Membranebene ε normal ausgerichtet und weist im Verlauf seiner Längserstreckung zumindest einen gekrümmten Steg 16 auf (im dargestellten Beispiel zwei symmetrisch gegenüberliegende Stege 16), dessen bzw. deren Krümmung bzw. Krümmungsradius sich in Abhängigkeit der durch die Sensormembran 12 eingeleiteten Kraft ändert, wobei jeweils ein sensitiver Teil 21 des Dehnungsmesselements 20 an den gekrümmten Stegen 16 befestigt ist.

Bei der Messung niedriger Drücke (im Bereich bis 10 bar) und einer kleinen Wirkfläche der Sensormembran 12, bei Verwendung eines Drucksensors mit kleinem Außendurchmesser, ergeben sich im Inneren des Sensors nur kleine Kräfte die auf das Trägerelement 15 wirken. Durch die Anordnung des sensitiven Teils 21 des Dehnungsmesselements 20 auf den gekrümmten Stegen 16 und der daraus resultierenden großen Dehnung des sensitiven Teils 21 wird eine Messung sehr kleiner Kräfte (bzw. Drücke) ermöglicht.

Dadurch, dass der sensitive Teil des Dehnungsmesselements (beispielsweise das metallische Messgitter einer DMS-Struktur) bevorzugt an der konvexen Außenfläche der gekrümmten Stege 16 platziert wird, kann nahezu die gesamte eingeleitete Verformung innerhalb der effektiven Messgitterlänge abgebaut werden und führt zu einer relativ großen Dehnung dieses Bereichs.

Die Signalableitung 23 der einzelnen Dehnungsmesselemente 20 ist nur strichliert angedeutet und kann bevorzugt zweipolig ausgeführt sein.

In Fig. 2 ist eine Variante des Drucksensors 10 dargestellt, bei welcher das Trägerelement 15 im zentralen Bereich seiner Längserstreckung nur einen gekrümmten Steg 16 aufweist, auf welchem ein Dehnungsmesselement angeordnet ist.

Der gekrümmte Steg 16 (siehe Fig. 2) bzw. die beiden gekrümmten Stege 16 des Trägerelements 15 (siehe Fig. 1) weisen eine Dicke d auf, die 5% bis 25% der Dicke D des Trägerelements 15 beträgt. Dadurch wird die druckinduzierte Verformung optimal in die gekrümmtem Stege 16 eingeleitet.

Wie in den Fig. 1 und Fig. 2 strichpunktiert angedeutet, kann der Drucksensor mit seinem Sensorgehäuse 11 schulterdichtend (siehe Fig. 1) oder frontdichtend (siehe Fig. 2 mit Frontdichtung 19) in eine Aufnahmestruktur 25 bzw. 26 eingesetzt werden. In gleiche Weise kann auch die Variante gemäß Fig. 1 frontdichtend und die Variante gemäß Fig. 2 schulterdichtend in einer Aufnahmestruktur befestigt sein.

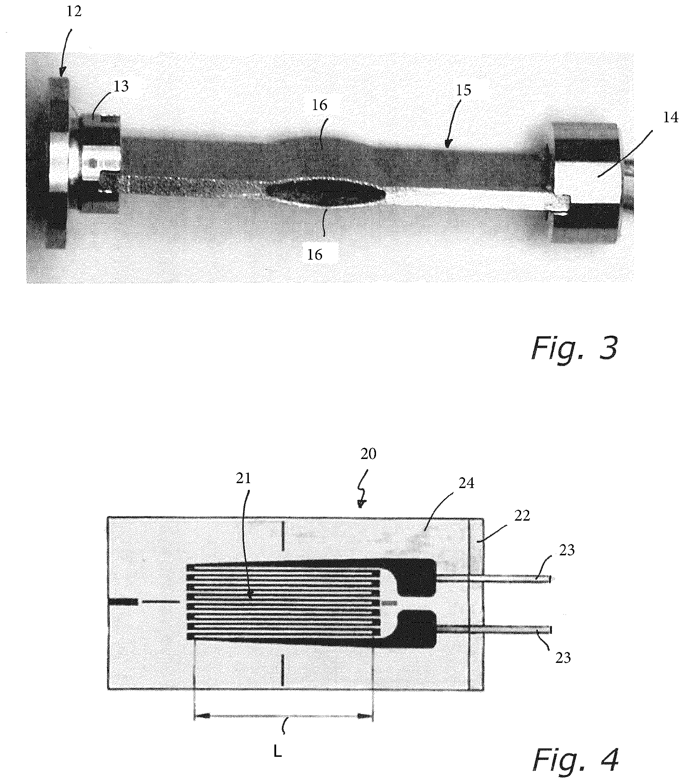

Fig. 3 zeigt ein konkretes Ausführungsbeispiel eines im Querschnitt beispielsweise rechteckförmigen Trägerelements 15, das einerseits am Membranstempel 13 der Sensormembran 12 und andererseits am Boden 14 des nicht weiter dargestellten Sensorgehäuses befestigt ist. Auf den konvexen Außenflächen der beiden gekrümmten Stege 16 kann jeweils ein Dehnungsmesselement 20, beispielsweise durch Kleben, Aufdrucken oder Sputtern, befestigt werden, derart, dass deren sensitiver Teil 21 im dünnen, gekrümmten Bereich angeordnet ist.

Fig. 4 zeigt ein Dehnungsmesselement 20, beispielsweise in Form einer DMS-Struktur in Draufsicht. Auf einer elektrisch isolierenden Trägerfolie, beispielsweise aus Polyimid, als nicht-sensitiver Teil 22, ist ein mäanderförmiges Messgitter eines metallischen Folien-Dehnmessstreifens (beispielsweise aus einer Konstantan-Folie) als sensitiver Teil 21 der DMS-Struktur aufgetragen und mit einer Deckschicht 24 (z.B. Polyimid) abgedeckt. Die Länge L des sensitiven Teils 21 entspricht der effektiven Messgitterlänge.

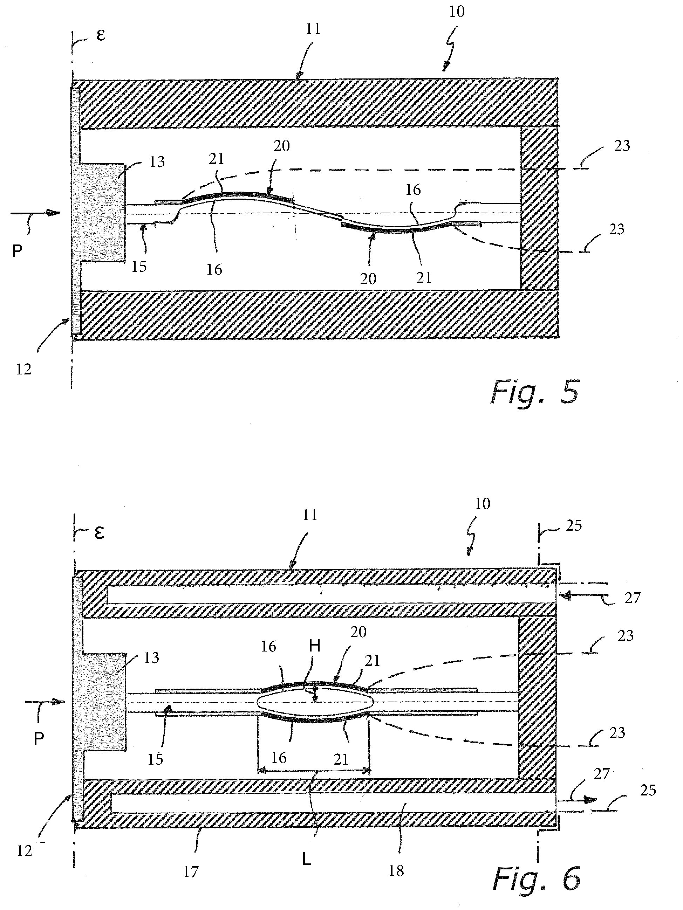

Bei der kompakten Ausführungsvariante des Drucksensors 10 gemäß Fig. 5, weist das Trägerelement 15 in seiner Längserstreckung nacheinander zumindest zwei gekrümmte Stege 16 auf, die S-förmig oder wellenförmig angeordnet sind und jeweils den sensitiven Teil 21 eines Dehnungsmesselements 20 tragen. Das Gehäuse dieser Variante kann sowohl schulterdichtend als auch frontdichtend in eine Aufnahmestruktur (nicht dargestellt) eingesetzt werden.

Schließlich zeigt Fig. 6 eine Variante des Drucksensors gemäß Fig. 1, wobei hier das Sensorgehäuse 11 eine zylindrische Wand 17 in Form eines Doppelmantels und dazwischen angeordneter zylindrischer Freistellung 18 aufweist. Die Freistellung 18 reicht ausgehend vom Bodenbereich des Sensorgehäuses 11 bis knapp an die Sensormembran 12 und dient einerseits der thermischen Isolierung der DMS-Struktur 20. Andererseits wird durch die Freistellung 18 die Einleitung von Verformungskräften aus der Aufnahmestruktur 25 in die Messzelle (bestehend aus Trägerelement 15 und Dehnungsmesselement 20) minimiert. Das Sensorgehäuse 11 wird beispielsweise schulterdichtend mit Hilfe des äußeren Mantels in die Aufnahmestruktur 25 eingesetzt.

Der Drucksensor 10 gemäß Fig. 6 kann auch frontdichtend in eine entsprechende Aufnahmebohrung (nicht dargestellt) eingesetzt bzw. eingeschraubt sein, wobei die Freistellung 18 in der zylindrischen Wand 17 hilft, Verformungskräfte, die an der äußeren Mantelfläche wirken, vom Inneren des Drucksensors fernzuhalten.

Die Freistellung 18 kann von einem Kühlmittel, beispielsweise Kühlwasser, durchströmt werden, wobei entsprechende Anschlüsse 27 für die Zu- und Abfuhr des Kühlmittels in Fig. 6 angedeutet sind.

Wie anhand der Variante gemäß Fig. 6 dargestellt, beträgt die Höhe H der Krümmung des gekrümmten Steges 16 (gemessen von der Längsachse des Trägerelements 15 bis zur konvexen Außenfläche des Steges 16), bevorzugt 10% bis 25% der Länge L des sensitiven Teils 21 des Dehnungsmesselements 20.

## Patentansprüche

1. Drucksensor (10) für statische und dynamische Druckmessungen, mit einem Sensorgehäuse (11) und einer druckseitig am Sensorgehäuse angeordneten Sensormembran (12), wobei im Sensorgehäuse (11) ein auf die Membranebene (ε) normal ausgerichtetes Trägerelement (15) angeordnet ist, welches mit der Sensormembran (12) zumindest indirekt in Kontakt steht, sich am Sensorgehäuse (11), vorzugsweise an dessen Boden (14), kraftschlüssig abstützt und ein Dehnungsmesselement (20) zur Gewinnung eines vom zu messenden Druck abhängigen Messsignals aufweist, **dadurch gekennzeichnet, dass** das Trägerelement (15) in seiner Längserstreckung zumindest einen gekrümmten Steg (16) aufweist, dessen Krümmung bzw. dessen Krümmungsradius sich in Abhängigkeit der durch die Sensormembran (12) eingeleiteten Kraft ändert, wobei ein sensitiver Teil (21) des Dehnungsmesselements (20) am gekrümmten Steg (16) befestigt ist, wobei ein Steg (16), der im unbelasteten Zustand nicht gekrümmt ist, ausgeschlossen ist.

2. Drucksensor (10) nach Anspruch 1, **dadurch gekennzeichnet, dass** das Trägerelement (15), bevorzugt in einer symmetrischen Anordnung, zwei gegenüberliegende, gekrümmte Stege (16) aufweist, an welchen jeweils ein sensitiver Teil (21) eines Dehnungsmesselements (20) befestigt ist.

3. Drucksensor (10) nach Anspruch 1, **dadurch gekennzeichnet, dass** das Trägerelement (15) in seiner Längserstreckung nacheinander zumindest zwei gekrümmte Stege (16) aufweist, die S-förmig oder wellenförmig angeordnet sind, an welchen jeweils der sensitive Teil (21) eines Dehnungsmesselements (20) befestigt ist.

4. Drucksensor (10) nach einem der Ansprüche 1 bis 3, **dadurch gekennzeichnet, dass** der sensitive Teil (21) des Dehnungsmesselements (20) jeweils an der konvexen Außenfläche des gekrümmten Steges (16) befestigt ist.

5. Drucksensor (10) nach einem der Ansprüche 1 bis 4, **dadurch gekennzeichnet, dass** der gekrümmte Steg (16) bzw. die gekrümmten Stege (16) des Trägerelements (15) eine Dicke d aufweisen, die 5% bis 25% der Dicke D des Trägerelements (15) beträgt.

6. Drucksensor (10) nach einem der Ansprüche 1 bis 5, **dadurch gekennzeichnet, dass** die Höhe H der Krümmung des gekrümmten Steges (16) 10% bis 25% der Länge L des sensitiven Teils (21) des Dehnungsmesselements (20) beträgt.

7. Drucksensor (10) nach einem der Ansprüche 1 bis 6, **dadurch gekennzeichnet, dass** die Sensormembran (12) einen zentralen Membranstempel (13) aufweist, der das Trägerelement (15) stirnseitig kontaktiert.

8. Drucksensor (10) nach einem der Ansprüche 1 bis 7, **dadurch gekennzeichnet, dass** das Gehäuse (11) des Drucksensors (10) schulterdichtend in eine Aufnahmestruktur (25) einsetzbar ist.

9. Drucksensor (10) nach einem der Ansprüche 1 bis 7, **dadurch gekennzeichnet, dass** das Gehäuse (11) des Drucksensors (10) frontdichtend in eine Aufnahmestruktur (26) einsetzbar ist.

10. Drucksensor (10) nach einem der Ansprüche 1 bis 9, **dadurch gekennzeichnet, dass** das Sensorgehäuse (11) eine zylindrische Wand (17) in Form eines Doppelmantels und dazwischen angeordneter zylindrischer Freistellung (18) aufweist.

11. Drucksensor (10) nach Anspruch 10, **dadurch gekennzeichnet, dass** die Freistellung (18) an der von der Sensormembran (12) abgewandten Seite Anschlüsse (27) für die Zu- und Abfuhr eines Kühlmittels, beispielsweise Kühlwasser, aufweist.

12. Drucksensor (10) nach einem der Ansprüche 1 bis 11, **dadurch gekennzeichnet, dass** das Trägerelement (15) und das Dehnungsmesselement (20) im vorzugsweisen geschlossenen Inneren des Sensorgehäuses (11) angeordnet sind.

13. Drucksensor (10) nach einem der Ansprüche 1 bis 12, **dadurch gekennzeichnet, dass** der sensitive Teil (21) des Dehnungsmesselements (20) ein mäanderförmiges Messgitter eines metallischen Folien-Dehnmessstreifens aufweist.

14. Drucksensor (10) nach einem der Ansprüche 1 bis 12, **dadurch gekennzeichnet, dass** der sensitive Teil (21) des Dehnungsmesselements (20) ein piezoresistives Element aufweist.

## Claims

1. Pressure sensor (10) for static and dynamic pressure measurements, having a sensor housing (11) and a sensor diaphragm (12) arranged on the pressure side of the sensor housing, wherein a support element (15), which is aligned normal to the diaphragm plane (ε) and is at least indirectly in contact with the sensor diaphragm (12), is arranged in the sensor housing (11), is supported in a force-fitting manner on the sensor housing (11), preferably on its base (14), and has a strain gauge element (20) for obtaining a measurement signal which is dependent on the pressure to be measured, **characterised in that** the support element (15) has, in its longitudinal extension, at least one curved web (16), whose curvature or radius of curvature changes as a function of the force introduced by the sensor diaphragm (12), wherein a sensitive part (21) of the strain gauge element (20) is fastened to the curved web (16), excluding a web (16), which is not curved in its unloaded state.

2. Pressure sensor (10) according to claim 1, **characterised in that** the support element (15), preferably in a symmetrical arrangement, has two opposite, curved webs (16), to each of which a sensitive part (21) of a strain gauge element (20) is attached.

3. Pressure sensor (10) according to claim 1, **characterised in that** the support element (15) has, in its longitudinal extension, successively at least two curved webs (16) which are arranged in an S-shape or in an undulating manner, to each of which the sensitive part (21) of a strain gauge element (20) is fastened.

4. Pressure sensor (10) according to one of claims 1 to 3, **characterised in that** the sensitive part (21) of the strain gauge element (20) is fixed in each case to the convex outer surface of the curved web (16).

5. Pressure sensor (10) according to one of claims 1 to 4, **characterised in that** the curved web (16) or curved webs (16) of the support element (15) have a thickness d that is 5% to 25% of the thickness D of the support element (15).

6. Pressure sensor (10) according to one of claims 1 to 5, **characterised in that** the height H of the curvature of the curved web (16) is 10% to 25% of the length L of the sensitive part (21) of the strain gauge element (20).

7. Pressure sensor (10) according to one of claims 1 to 6, **characterised in that** the sensor diaphragm (12) has a central diaphragm stamp (13) which contacts the support element (15) on the end face.

8. Pressure sensor (10) according to one of claims 1 to 7, **characterised in that** the housing (11) of the pressure sensor (10) is insertable into a receiving structure (25) in a shoulder-sealing manner.

9. Pressure sensor (10) according to one of claims 1 to 7, **characterised in that** the housing (11) of the pressure sensor (10) is insertable into a receiving structure (26) in a front-sealing manner.

10. Pressure sensor (10) according to one of claims 1 to 9, **characterised in that** the sensor housing (11) has a cylindrical wall (17) in the form of a double jacket and cylindrical clearance (18) arranged therebetween.

11. Pressure sensor (10) according to claim 10, **characterised in that** the clearance (18) has connections (27) for the supply and removal of a coolant, for example cooling water, on the side facing away from the sensor diaphragm (12).

12. Pressure sensor (10) according to one of claims 1 to 11, **characterised in that** the support element (15) and the strain gauge element (20) are arranged in the preferably closed interior of the sensor housing (11).

13. Pressure sensor (10) according to one of claims 1 to 12, **characterised in that** the sensitive part (21) of the strain gauge element (20) comprises a meandering measuring grid of a metallic foil strain gauge.

14. Pressure sensor (10) according to one of claims 1 to 12, **characterised in that** the sensitive part (21) of the strain gauge element (20) comprises a piezoresistive element.

## Revendications

1. Capteur de pression (10) pour des mesures de pressions statique et dynamique, comportant :
- un boîtier de capteur (11) ainsi qu'une membrane de capteur (12) sur le côté du boîtier de capteur (11) exposé à la pression,
- un élément de support (15) orienté perpendiculairement au plan de membrane (ε) dans le boîtier de capteur (11) et qui est en contact, au moins indirect, avec la membrane de capteur (12), en s'appuyant par une liaison par la force sur le boîtier de capteur (11), de préférence contre son fond (14) et un élément de mesure d'allongement (20) pour obtenir un signal de mesure dépendant de la pression à mesurer,
capteur de pression **caractérisé en ce que**
l'élément de support (15) présente dans son extension longitudinale au moins une barrette cintrée (16) ou dont le rayon de courbure varie en fonction de la pression appliquée à la membrane de capteur (12),
* une partie sensible (21) de l'élément de mesure d'allongement (20) étant fixée à la barrette cintrée (16),
* à l'exclusion de toute barrette (16) qui n'est pas cintrée à l'état non sollicité.

2. Capteur de pression (10) selon la revendication 1,
**caractérisé en ce que**
l'élément de support (15) a de préférence deux barrettes cintrées (16), qui se font face selon une disposition symétrique, et auquel est fixé un élément sensible (21) de l'élément de mesure d'allongement (20).

3. Capteur de pression (10) selon la revendication 1,
**caractérisé en ce que**
l'élément de support (15) présente dans son extension longitudinale, successivement au moins deux barrettes cintrées (16) qui sont en forme de S ou de forme ondulée et auxquelles est fixée respectivement la partie sensible (21) de l'élément de mesure d'allongement (20).

4. Capteur de pression (10) selon l'une des revendications 1 à 3, **caractérisé en ce que**
la partie sensible (21) de l'élément de mesure de l'allongement (20) est fixée à la surface extérieure convexe de l'entretoise cintrée (16).

5. Capteur de pression (10) selon l'une des revendications 1 à 4, **caractérisé en ce que**
la ou les entretoises cintrées (16) de l'élément de support (15) ont une épaisseur qui correspond à 5%-25% de l'épaisseur D de l'élément de support (15).

6. Capteur de pression (10) selon l'une des revendications 1 à 5, **caractérisé en ce que**
la hauteur H de la courbure de l'entretoise cintrée (16) représente entre 10% et 25% de la longueur L de la partie sensible (21) de l'élément de mesure d'allongement (20).

7. Capteur de pression (10) selon l'une des revendications 1 à 6, **caractérisé en ce que**
la membrane de capteur (12) a un poinçon central de membrane (13) qui est en contact frontal avec l'élément de support (15).

8. Capteur de pression (10) selon l'une des revendications 1 à 7, **caractérisé en ce que**
le boîtier (11) du capteur de pression (10) est appliqué de manière à épouser la forme de l'épaulement de la structure réceptrice (25).

9. Capteur de pression (10) selon l'une des revendications 1 à 7, **caractérisé en ce que**
le boîtier (11) du capteur de pression (10) est appliqué de manière étanche frontalement dans la structure réceptrice (26).

10. Capteur de pression (10) selon l'une des revendications 1 à 9, **caractérisé en ce que**
le boîtier de capteur (11) a une paroi cylindrique (17) en forme de double enveloppe avec interposition d'un dégagement cylindrique (18).

11. Capteur de pression (10) selon la revendication 10,
**caractérisé en ce que**
le dégagement (18) comporte sur son côté opposé à celui de la membrane de capteur (12), des branchements (27) pour l'arrivée et la sortie d'un agent de refroidissement, par exemple de l'eau de refroidissement.

12. Capteur de pression (10) selon l'une des revendications 1 à 11, **caractérisé en ce que**
l'élément de support (15) et l'élément de mesure de l'allongement (20) sont de préférence à l'intérieur fermé du boîtier de capteur (11).

13. Capteur de pression (10) selon l'une des revendications 1 à 12, **caractérisé en ce que**
la partie sensible (21) de l'élément de mesure d'allongement (20) est une grille de mesure en forme de méandres d'une bande de mesure d'allongement sous forme de film métallique.

14. Capteur de pression (10) selon l'une des revendications 1 à 12, **caractérisé en ce que**
la partie sensible (21) de l'élément de mesure d'allongement (20) comporte un élément piézorésistant.
